# EUROPEAN PATENT APPLICATION

(11) **EP 2 868 565 A1**
(43) Date of publication of application: **06.05.2015**
(21) Application number: 12879999.6
(22) Date of filing: 29.06.2012
(51) Int. Cl.: B62M 6/90, B62M 6/45

(54) **BATTERY MOUNTING DEVICE AND ELECTRIC BICYCLE**

(71) Applicant: Panasonic Intellectual Property Management Co., Ltd., Osaka-shi, Osaka 540-6207 (JP)
(72) Inventor: OGAWA, Mitsuru, Osaka-shi, Osaka 540-6207 (JP)
(74) Representative: Grünecker Patent- und Rechtsanwälte PartG mbB
(86) International application number: PCT/JP2012/004214
(87) International publication number: WO 2014/002141

(57) **Abstract**

A battery mounting device 14 is designed to mount a battery 13 on an electric vehicle 1 having an electric drive device 12. A hollow part 35 is formed in a holding base 16 that is mounted on a vehicle body 2 of the electric vehicle 1 and detachably holds the battery 13. A controller 36 for controlling the electric drive device 12 is stored in the hollow part 35.

## Description

### Technical Field

The present invention relates to a battery mounting device for mounting a battery to an electric vehicle, for example, an electric bicycle, and an electric bicycle.

### Background Art

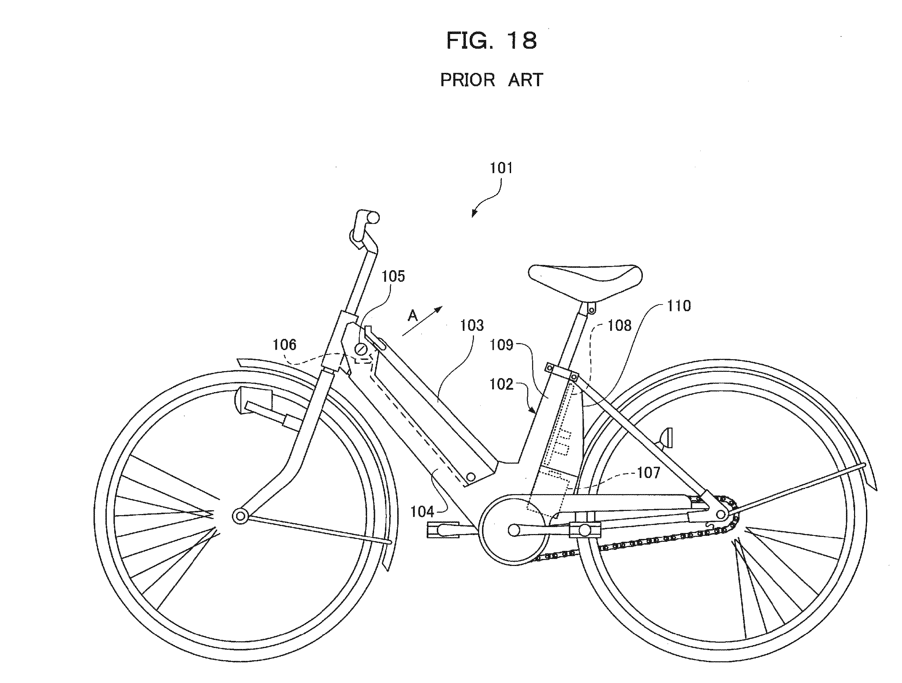

Conventionally, as shown in an example of FIG. 18, a holding part 104 of a battery 103 is provided on a vehicle body frame 102 of an electric bicycle 101. The battery 103 is detachably mounted on the holding part 104.

The vehicle body frame 102 includes a locking device 105 that fastens and releases the battery 103 mounted on the holding part 104 and an auxiliary removal lever 106 that presses the front of the battery 103 in a released state from the holding part 104 in a removal direction A.

The battery 103 supplies power to an auxiliary power unit 107 provided on the electric bicycle 101. The auxiliary power unit 107 includes a motor. The electric bicycle 101 further includes a controller 108 for controlling the auxiliary power unit 107. The controller 108 is mounted behind a seat frame 109 and is stored in a protective case 110.

With this configuration, the controller 108 is protected from rain and the like by the protective case 110.

The battery mounting structure configured thus is described in, for example, Patent Literature 1.

### Citation List

### Patent Literature

Patent Literature 1: Japanese Patent No. 3403874

### Summary of Invention

### Technical Problem

In the related art, however, a space for providing the controller 108 and the protective case 110 is necessary behind the seat frame 109, disadvantageously increasing the size of the vehicle body in the longitudinal direction. Moreover, the necessity for the protective case 110 designed for protecting the controller 108 may disadvantageously increase the number of components.

An object of the present invention is to provide a battery mounting device and an electric bicycle including a vehicle body that can be reduced in size and weight.

### Solution to Problem

In order to attain the object, a first invention is a battery mounting device for mounting a battery on an electric vehicle having an electric drive device, the battery mounting device including a controller for controlling the electric drive device, the controller being provided in a holding base that is mounted on the vehicle body of the electric vehicle and detachably holds the battery.

With this configuration, the controller is stored in the holding base of the battery and thus is protected from rain and the like by the holding base. Thus, the protective cover of the controller is shared by the holding base, eliminating the need for a special protective cover. This can reduce the number of components, achieving a size and weight reduction of the vehicle body.

A second invention is a battery mounting device, wherein the holding base has a hollow part, and the controller is stored in the hollow part.

A third invention is a battery mounting device, wherein the controller is electrically connected to the electric drive device via a plurality of wires, and the holding base has a binding member that ties the wires.

With this configuration, the wires are tied with the binding member and thus can be prevented from spreading out.

A fourth invention is a battery mounting device, wherein the holding base has latching portions, the binding member is mounted on the holding base so as to be latched on the latching portions and is stored in a cover, the cover is detachably mounted on the holding base, and the cover has removal preventing portions inside the cover, the removal preventing portions preventing the binding member from being removed from the latching portions.

With this configuration, the binding member is latched on the latching portions and then the cover is mounted on the holding base, allowing the binding member to be stored in the cover. At this point, the removal preventing portions prevent the binding member from separating from the latching portions.

A fifth invention is a battery mounting device, wherein the holding base includes a base body and a lid detachably mounted on the base body.

With this configuration, the lid is removed from the base body while the battery is removed from the holding base. This opens the hollow part in the holding base, facilitating inspection, maintenance, replacement, and the like of the controller.

A six invention is a battery mounting device, wherein the holding base includes a connector connectable to the battery, and the lid is divided into a first lid member covering the controller and a second lid member covering the connector, the first and second lid members being separately mounted on the base body in a detachable manner.

With this configuration, when the battery is mounted on the holding base, the connector of the holding base is connected to the battery, electrically connecting the battery and the controller via the connector.

The second lid member is removed from the base body while the battery is removed from the holding base. Thus, the connector is exposed to the outside, facilitating inspection, maintenance, replacement, and the like of the connector. In the inspection, maintenance, replacement, and the like of the controller, the first lid member may be removed from the base body.

A seventh invention is an electric bicycle including the battery mounting device according to any one of the first to sixth inventions, the holding base being provided on a vehicle body frame.

### Advantageous Effect of Invention

As described above, the present invention can reduce the number of components so as to achieve a size and weight reduction of a vehicle body.

### Brief Description of Drawings

[FIG. 1] FIG. 1 is a side view of an electric bicycle including a battery mounting device according to an embodiment of the present invention.
[FIG. 2] FIG. 2 is a perspective view of the battery mounting device.
[FIG. 3] FIG. 3 is an exploded perspective view of the battery mounting device.
[FIG. 4] FIG. 4 is a side view of the battery mounting device and a battery pressed in a removal direction.
[FIG. 5] FIG. 5 is a side view of the battery mounting device and the battery mounted on a holding base.
[FIG. 6] FIG. 6 is an exploded perspective view of the battery mounting device and the holding base.
[FIG. 7] FIG. 7 is a cross-sectional view of the holding base of the battery mounting device, taken along the line X-X of FIG. 3.
[FIG. 8] FIG. 8 is a bottom view of the lid of the holding base of the battery mounting device.
[FIG. 9] FIG. 9 is a perspective view of the holding base of the battery mounting device.
[FIG. 10] FIG. 10 is a plan view of the holding base of the battery mounting device.
[FIG. 11] FIG. 11 is a cross-sectional view taken along the line X-X of FIG. 10.
[FIG. 12] FIG. 12 shows a band of the battery mounting device.
[FIG. 13] FIG. 13 is a side view showing the interior of a cover mounted on the holding base of the battery mounting device.
[FIG. 14] FIG. 14 is a cross-sectional view taken along the line X-X of FIG. 2.
[FIG. 15] FIG. 15 shows the interior of the cover of the battery mounting device.
[FIG. 16] FIG. 16 is a side view of the battery mounted on the battery mounting device.
[FIG. 17] FIG. 17 is a cross-sectional view taken along the line X-X of FIG. 16.
[FIG. 18] FIG. 18 is a side view of an electric bicycle including a conventional battery.

### Description of Embodiment

An embodiment of the present invention will be described below with reference to the accompanying drawings.

### (First Embodiment)

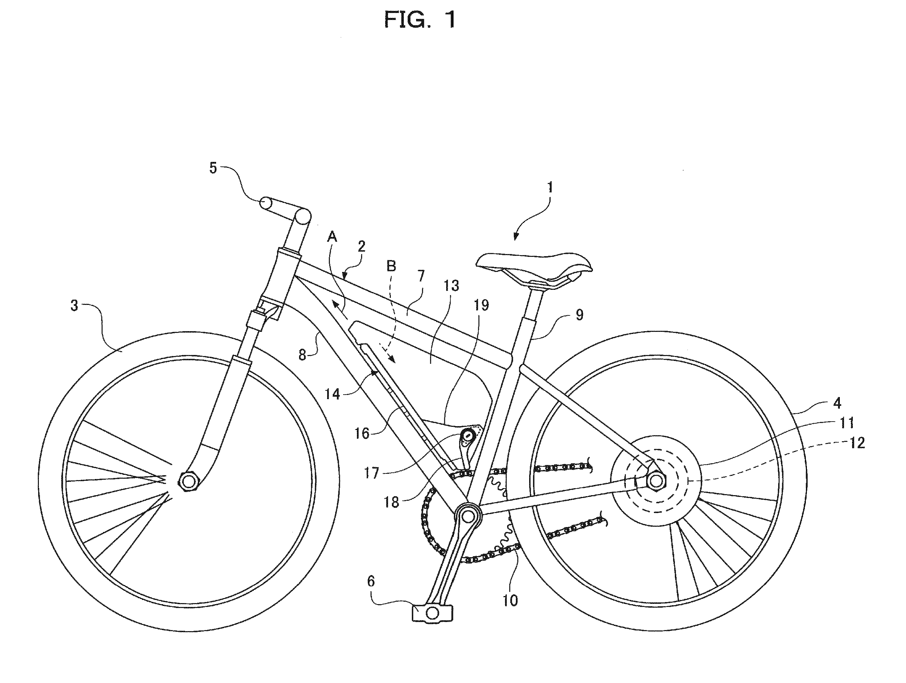

As shown in FIG. 1, reference numeral 1 denotes an electric bicycle as an example of an electric vehicle. The electric bicycle 1 includes a vehicle body frame 2, a front wheel 3, a rear wheel 4, a handlebar 5, pedals 6, and a chain 10. The vehicle body frame 2 includes a top tube 7, a down tube 8, and a seat tube 9 that are bonded in a triangular shape.

An electric-operation hub device 11 is provided at the center of the rear wheel 4. The electric-operation hub device 11 contains an electric drive device 12, e.g., a motor that applies an auxiliary turning force to the rear wheel 4. The vehicle body frame 2 further includes a battery 13 that supplies power to the electric drive device 12. The battery 13 is mounted on the down tube 8 of the vehicle body frame 2 via a battery mounting device 14.

The configuration of the battery mounting device 14 will be described below.

As shown in FIGS. 1 to 3, the battery mounting device 14 includes a holding base 16 that is mounted on the down tube 8 and detachably holds the battery 13, a locking device 17 that fastens and releases the battery 13 held by the holding base 16, an auxiliary removal lever 18 that presses the battery 13 in a released state in a removal direction A, and a cover 19.

The battery 13 is detachably held by the holding base 16 and is disposed between the top tube 7 and the down tube 8. As shown in FIG. 1, the removal direction A of the battery 13 is a forward direction extending obliquely upward along a first base part 21 while a backward direction extending obliquely downward along the first base part 21 is a mounting direction B of the battery 13.

The holding base 16 has the flat first base part 21 and a trapezoidal second base part 22 protruding rearward from the lower end of the rear side of the first base part 21.

A plug-in mounting-part connector 23 is provided on the upper end of the front side of the first base part 21 so as to be connectable to the battery 13. L-shaped engaged portions 24 are provided on two sides of the first base part 21.

The locking device 17 is a cylinder lock including a cylindrical locking barrel 26 that is provided on the second base part 22 and is stored in the cover 19, and a keyhole 27 that is exposed to the outside from the cover 19. The auxiliary removal lever 18 is pivotally supported by the locking barrel 26 so as to be fit onto the locking barrel 26. The proximal end of the auxiliary removal lever 18 includes a cam member 29 that presses the battery 13 in the removal direction A.

The cover 19 is divided into cover parts 19a and 19b on one side and the other and is detachably mounted on the second base part 22.

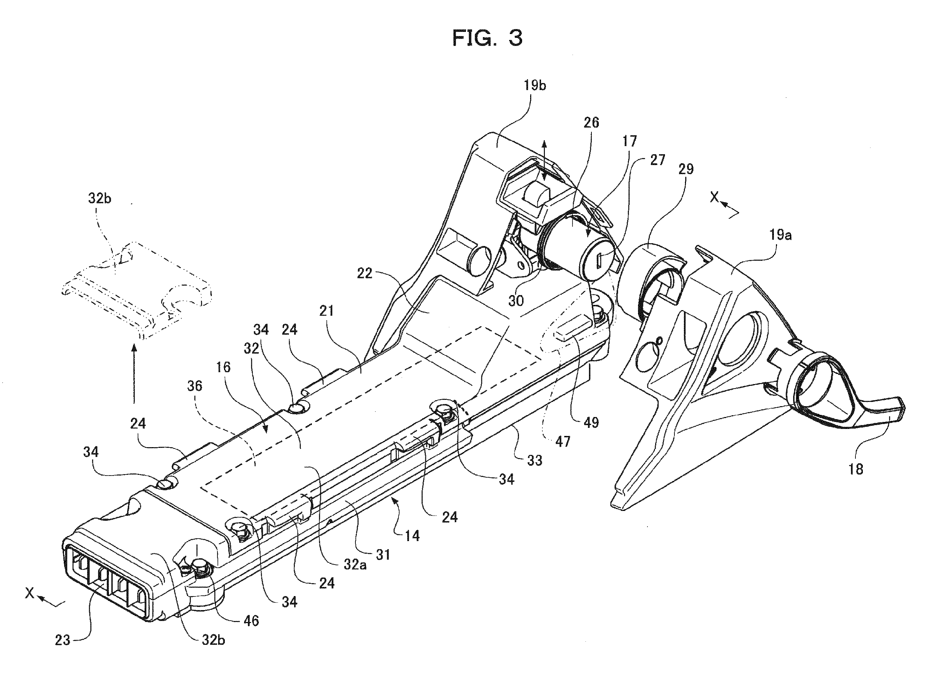

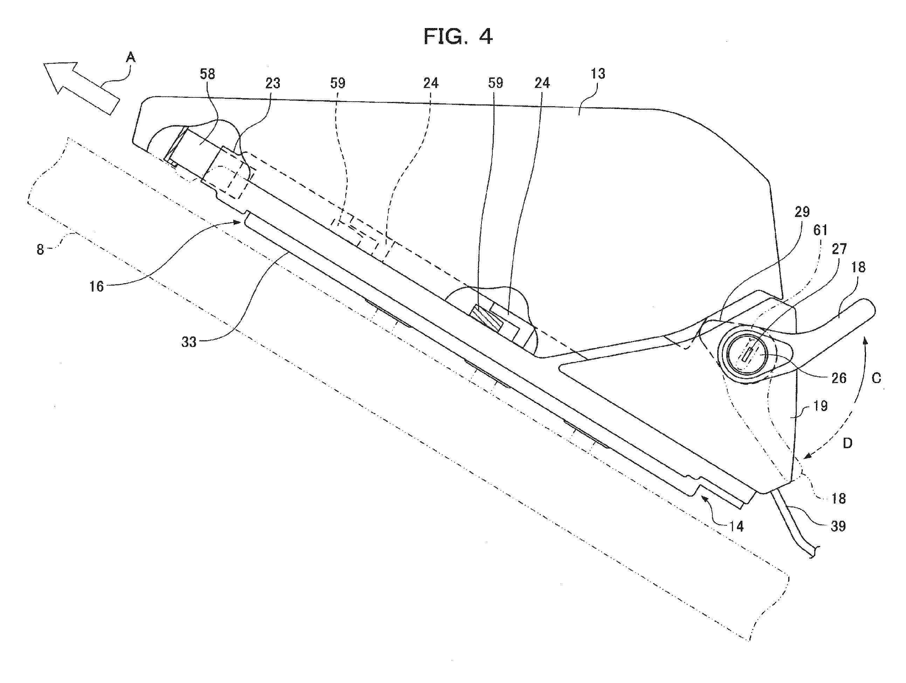

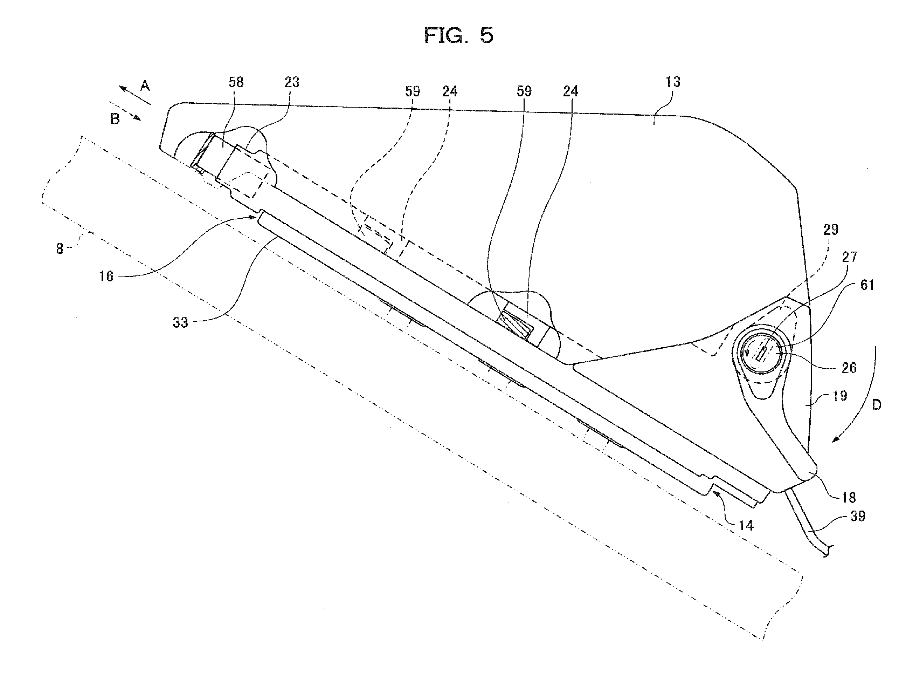

As shown in FIG. 4, when the auxiliary removal lever 18 is pivoted in one direction C, the cam member 29 presses the battery 13 in the removal direction A. As shown in FIG. 5, when the auxiliary removal lever 18 is pivoted in the other direction D, the cam member 29 separates and retracted from the battery 13. As shown in FIG. 3, the locking barrel 26 is inserted into a spring 30 that biases the auxiliary removal lever 18 in the other direction D. One end of the spring 30 is fixed to the cover 19 while the other end of the spring 30 is fixed to the cam member 29.

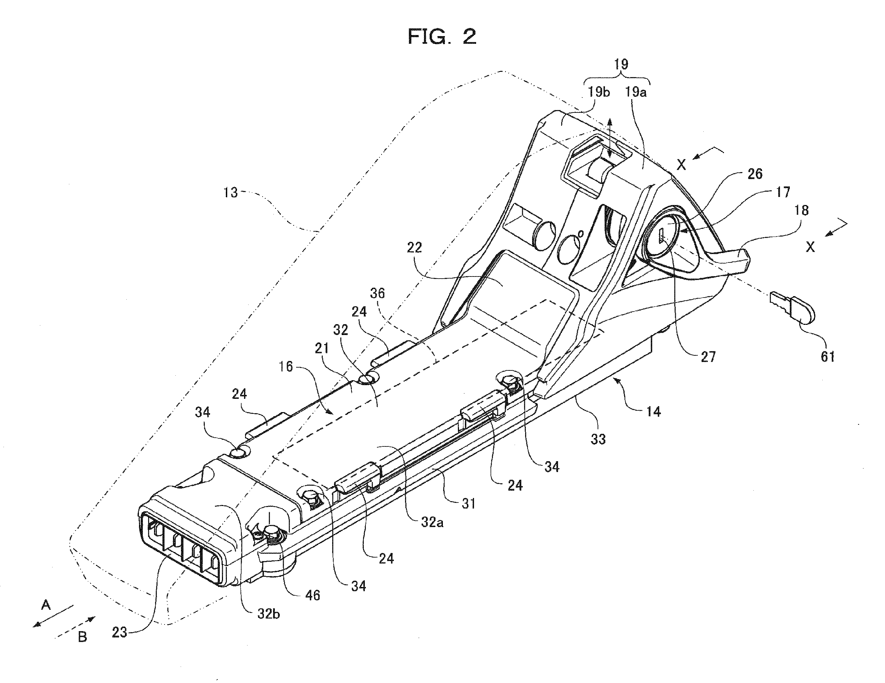

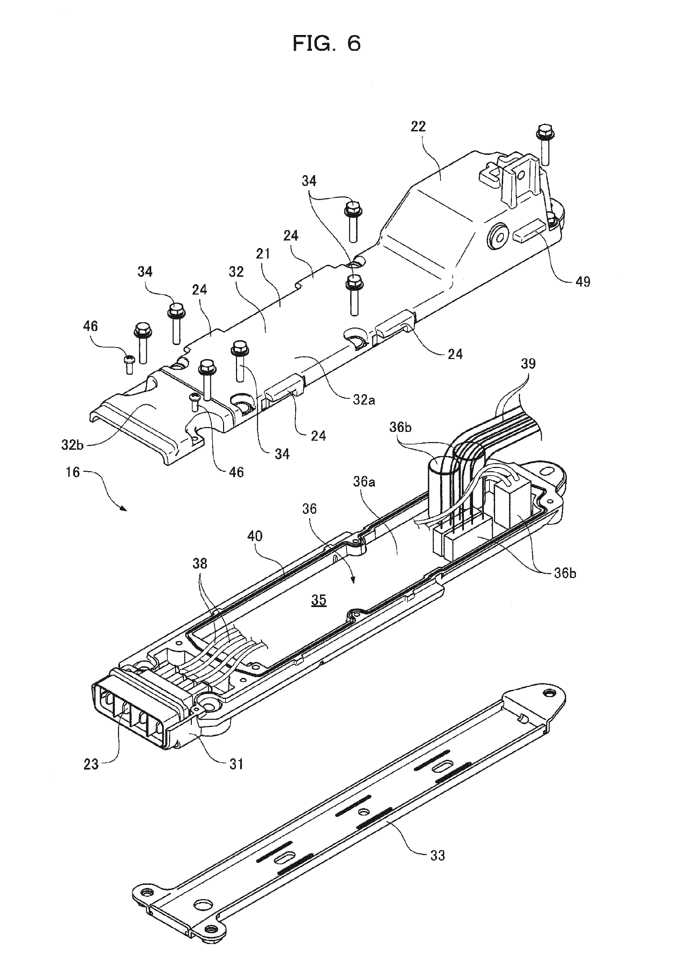

As shown in FIGS. 2 and 6, the holding base 16 is vertically divided into three parts: a base body 31, a lid 32, and a bottom mounting plate 33. The bottom mounting plate 33 is mounted on the down tube 8 while the base body 31 is provided on the bottom mounting plate 33. The lid 32 is detachably mounted on the base body 31 with a plurality of fasteners 34 and 46, e.g., screws. The entire peripheries of the lid 32 and the base body 31 are sealed with an annular first seal member 40.

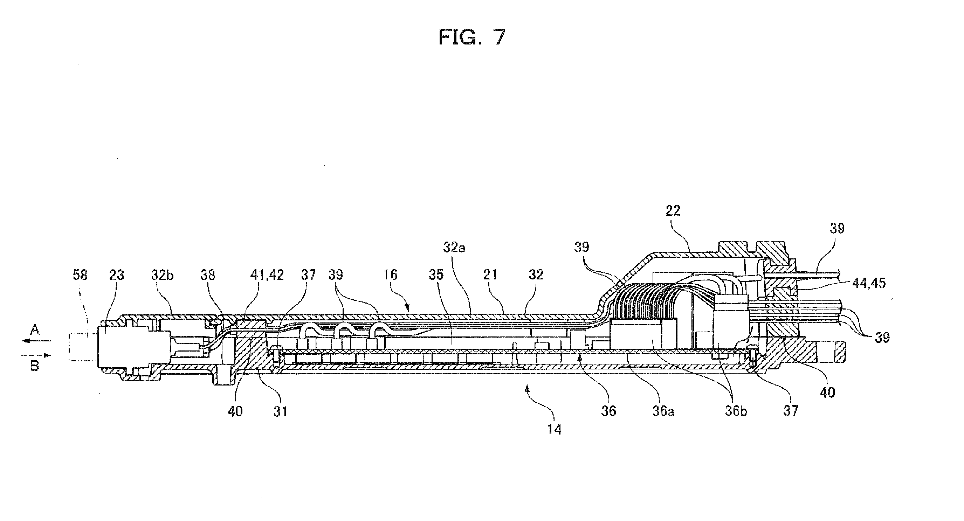

As shown in FIGS. 6 and 7, the holding base 16 has a hollow part 35 formed therein surrounded by the base body 31 and the lid 32. A controller 36 for controlling the electric drive device 12 is stored in the hollow part 35. The controller 36 includes a substrate 36a and a plurality of electronic components 36b mounted on the substrate 36a. The substrate 36a is fixed to the base body 31 with a plurality of screws 37.

The mounting-part connector 23 is electrically connected to the controller 36 via a plurality of wires 38. The controller 36 is electrically connected to the electric drive device 12 via a plurality of wires 39.

The lid 32 is divided into a first lid member 32a covering the top of the controller 36 and a second lid member 32b covering the top of the mounting-part connector 23. The first lid member 32a is detachably mounted on the base body 31 with the fasteners 34. Likewise, the second lid member 32b is detachably mounted on the base body 31 with the fasteners 46.

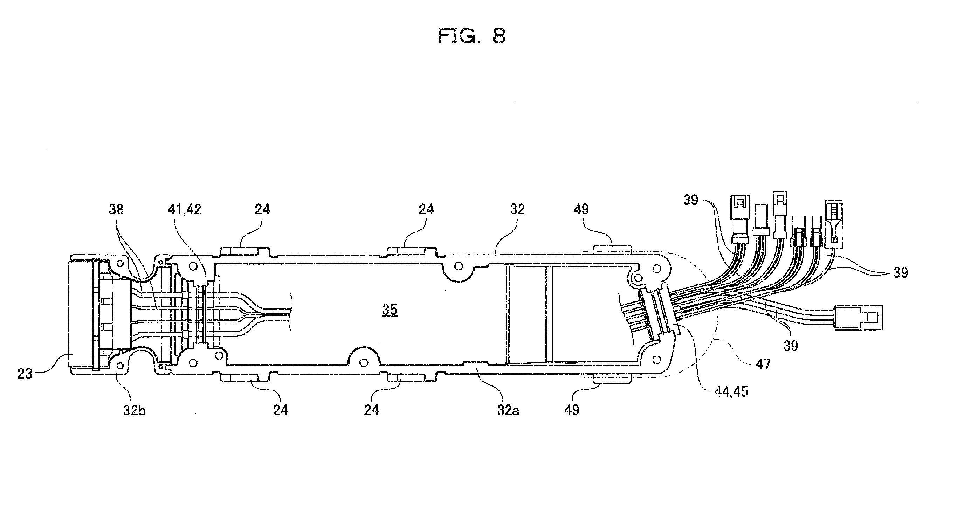

As shown in FIGS. 7 and 8, the front of the holding base 16 has a wire inlet 41 through which the wires 38 connected to the mounting-part connector 23 are drawn into the hollow part 35. The mounting-part connector 23 and the hollow part 35 communicate with each other through the wire inlet 41. A second seal member 42 that seals the wire inlet 41 is fit into the front of the lid 32. The wires 38 are inserted into multiple through holes formed on the second seal member 42.

As shown in FIGS. 7 to 9, the rear end of the holding base 16 has a wire inlet 44 through which the wires 39 connected to the controller 36 are drawn to the exterior of the holding base 16 from the hollow part 35. The hollow part 35 and the exterior of the holding base 16 communicate with each other through the wire inlet 44. A third seal member 45 that seals the wire inlet 44 is fit into the rear of the lid 32. The wires 39 are inserted into multiple through holes formed on the third seal member 45.

The second and third seal members 42 and 45 are square plates. The first to third seal members 40, 42, and 45 are made of an elastic material, e.g., rubber.

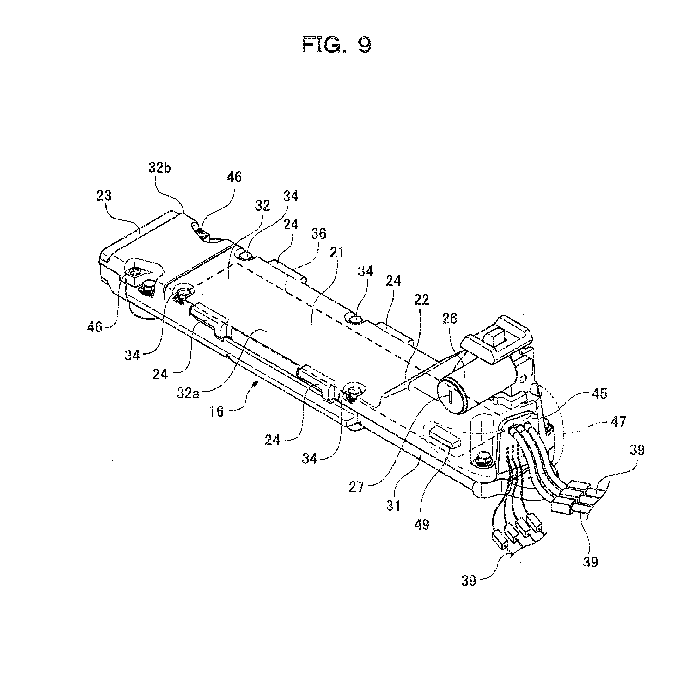

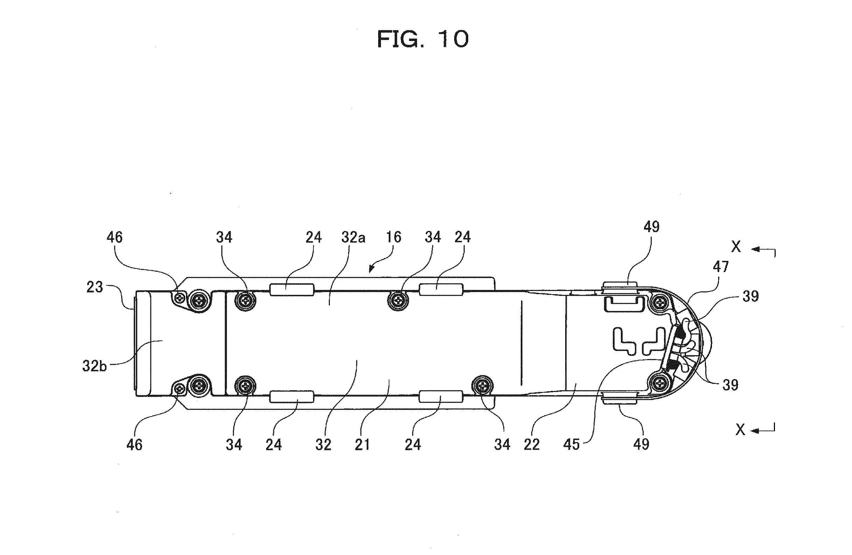

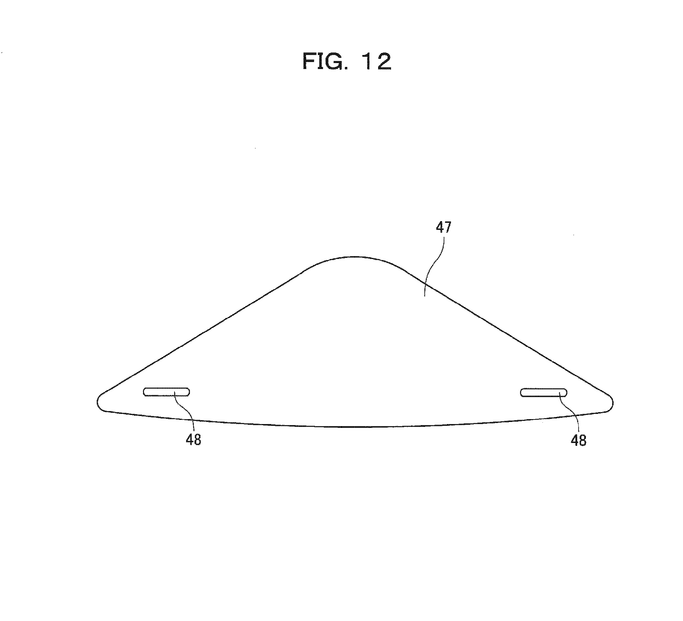

As shown in FIGS. 9 to 12, the holding base 16 has a band 47 (an example of a binding member) that ties the wires 39 drawn to the exterior of the holding base 16 from the third seal member 45. The band 47 is an elastic material, e.g., stretchable rubber. Latch holes 48 are provided on two ends of the band 47. Latch protrusions 49 (an example of a latching portion) are provided on two sides of the rear of the lid 32. As shown in FIGS. 10, 11, and 13, the latch holes 48 are latched on the latch protrusions 49, latching the band 47 to the latch protrusions 49.

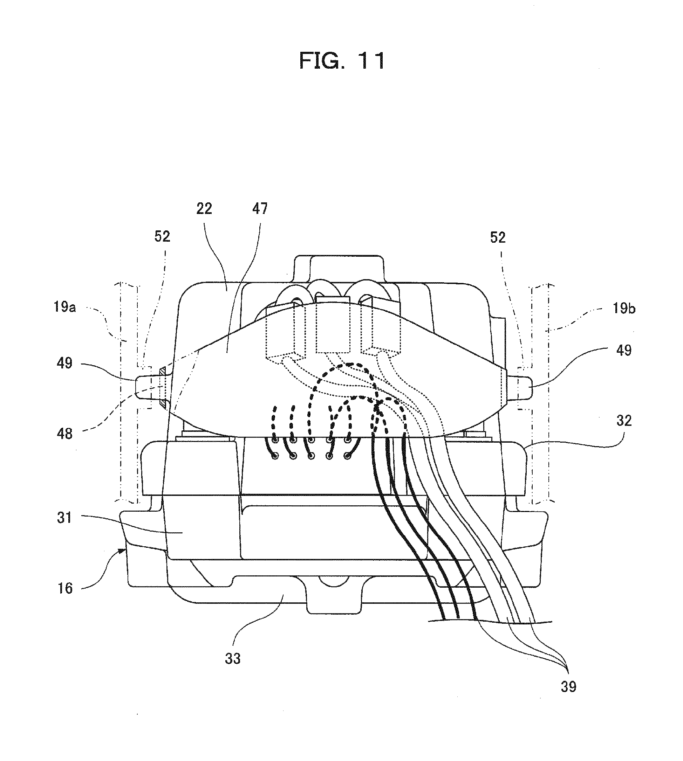

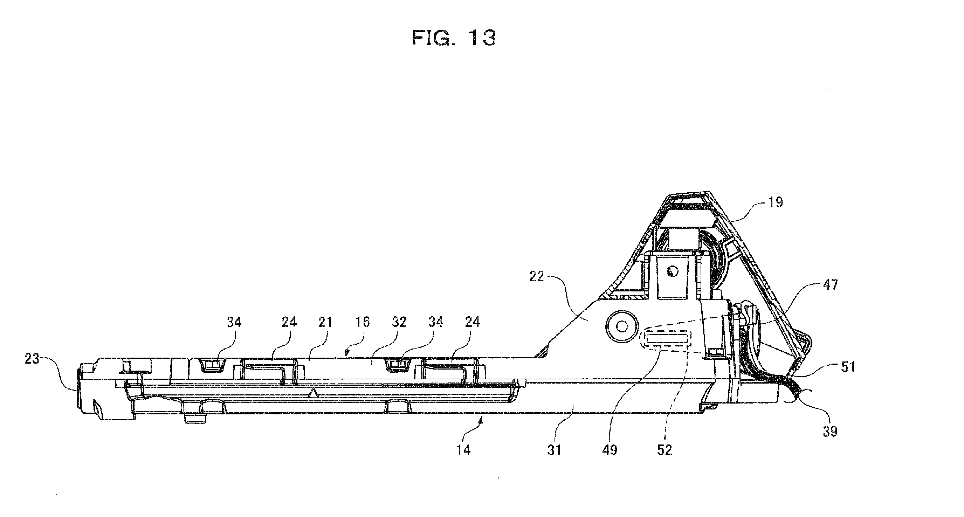

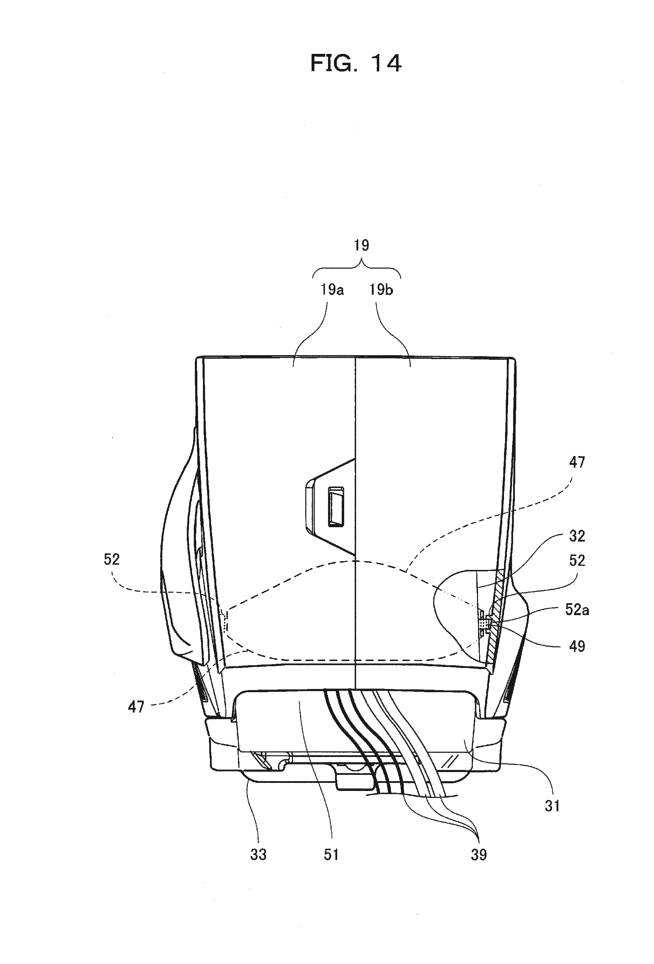

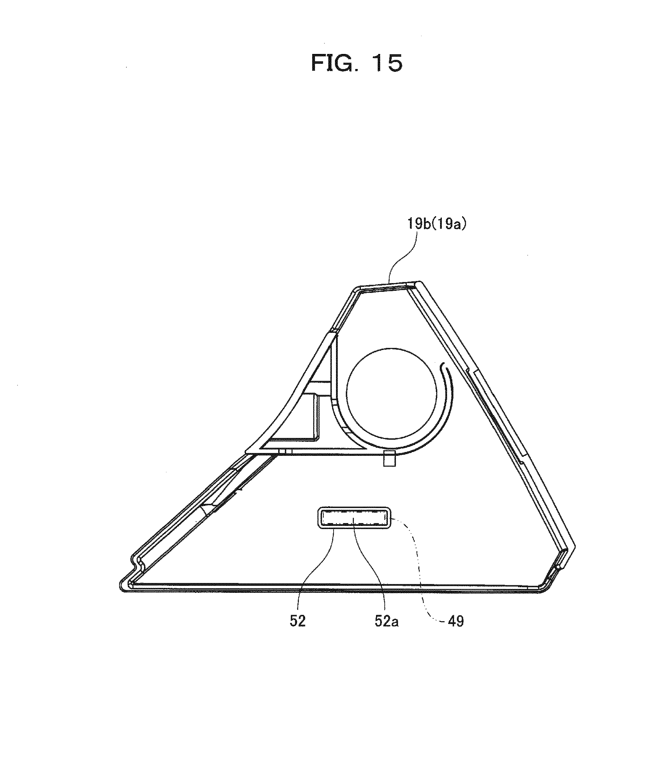

As shown in FIGS. 13 and 14, the band 47 is stored in the cover 19. The cover 19 has an opening 51 from which the wires 39 bound with the band 47 are drawn to the outside of the cover 19. As shown in FIGS. 14 and 15, removal preventing protrusions 52 (an example of a removal preventing portion) are provided on the inner surface of the cover 19, specifically, on the respective inner surfaces of the cover parts 19a and 19b on the one side and the other. The removal preventing protrusions 52 are rectangular protrusions, each including a concave portion 52a for preventing the end of the band 47 from separating from the latch protrusion 49. As shown in FIGS. 11, 14, and 15, the end of the latch protrusion 49 is fit into the concave portion 52a of the removal preventing protrusion 52.

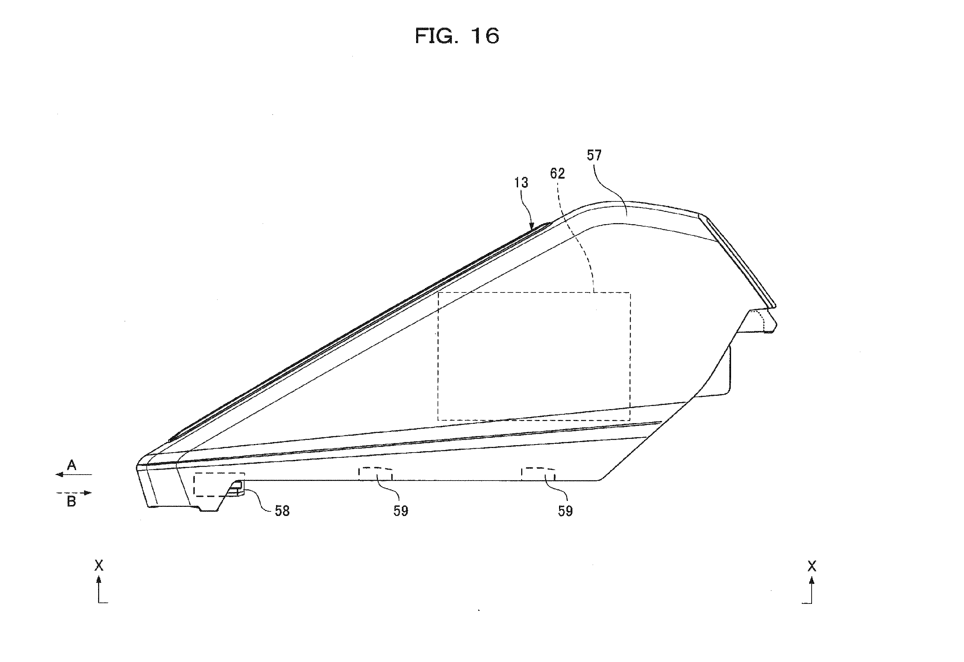

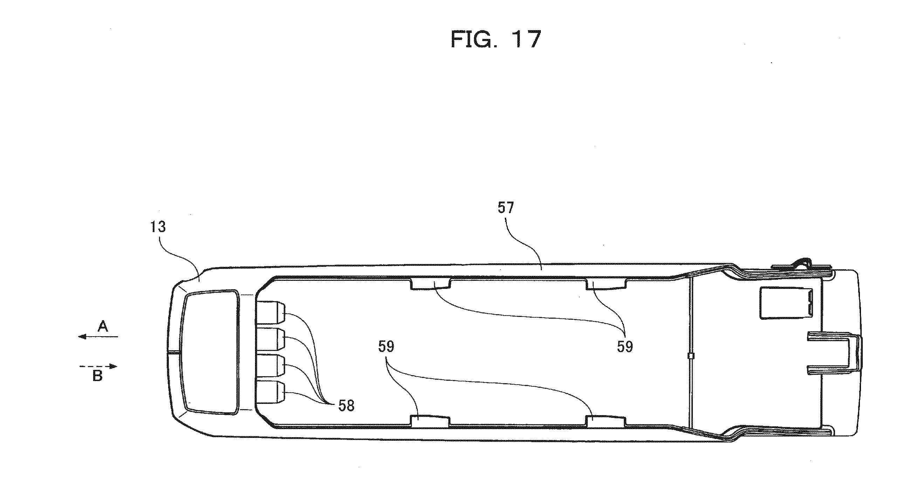

As shown in FIGS. 16 and 17, the battery 13 has a battery case 57 and a secondary battery cell 62 stored in the battery case 57. The battery case 57 is a substantially triangular member having a sharpened front end. A plug-in battery connector 58 is provided under the front end of the battery case 57. The battery connector 58 can be inserted into the mounting-part connector 23 in the mounting direction B of the battery 13 (see virtual lines in FIGS. 5 and 7) and can be removed from the mounting-part connector 23 in the removal direction A of the battery 13.

A plurality of engaging portions 59 are provided on two sides in the front of the bottom of the battery case 57. The engaging portions 59 can be engaged with the engaged portions 24 (see FIG. 2) of the holding base 16 in the mounting direction B of the battery 13 and can be removed from the engaged portions 24 in the removal direction A of the battery 13.

The effect of the configuration will be described below.

As shown in FIGS. 2, 6, and 7, the controller 36 is stored in the hollow part 35 in the holding base 16 of the battery 13 and thus is protected from rain and the like by the holding base 16. Thus, the protective cover of the controller 36 is shared by the holding base 16, eliminating the need for a protective cover designed for the controller. This can reduces the number of components, achieving a size and weight reduction of the vehicle body.

As shown in FIG. 6, the entire peripheries of the base body 31 and the lid 32 of the holding base 16 are sealed with the first seal member 40, thereby preventing entry of water into the hollow part 35 from between the base body 31 and the lid 32. As shown in FIGS. 7 and 8, the wire inlet 41 of the holding base 16 is sealed with the second seal member 42, thereby preventing entry of water into the hollow part 35 from the wire inlet 41. The wire inlet 44 of the holding base 16 is sealed with the third seal member 45 and thus can prevent entry of water into the hollow part 35 from the wire inlet 44.

Since the wire inlet 44 can reliably prevent entry of water into the hollow part 35, the waterproofness of the holding base 16 is improved to reliably protect the controller 36 from water.

As shown in FIGS. 10, 11, 13, and 14, the wires 39 drawn to the outside of the holding base 16 from the third seal member 45 are tied with the band 47 in the cover 19. This can prevent the wires 39 from spreading out.

Moreover, the latch holes 48 of the band 47 are latched on the latch protrusions 49. In this state, the cover 19 is divided into the two cover parts 19a and 19b, the removal preventing protrusions 52 are fit onto the ends of the latch protrusions 49, and then the cover parts 19a and 19b on the one side and the other are sequentially mounted on the second base part 22 as shown in FIGS. 2 and 14. Thus, as shown in FIGS. 11, 13, and 14, the ends of the latch protrusions 49 are fit into the concave portions 52a of the protrusions 52, thereby preventing the ends of the band 47 from separating from the latch protrusions 49. This can reliably tie the wires 39 with the band 47.

When the battery 13 is removed from the holding base 16, as shown in FIG. 2, a key 61 is inserted into the keyhole 27 of the locking device 17 and then is rotated in an unlocking direction, releasing the battery 13. Subsequently, as indicated by a solid line in FIG. 4, the auxiliary removal lever 18 is pivoted in the direction C, allowing the cam member 29 to come into contact with the battery 13 and press the battery 13 in the removal direction A. This moves the battery connector 58 in a direction that separates from the mounting-part connector 23 and the engaging portions 59 of the battery 13 move in a direction that separates from the engaged portions 24 of the holding base 16, easily removing the battery 13 from the holding base 16.

After that, when a hand is separated from the auxiliary removal lever 18, as indicated by a virtual line in FIG. 4, the auxiliary removal lever 18 is pivoted in the other direction D by the biasing force of the spring 30 so as to retract the cam member 29.

The battery 13 removed thus from the holding base 16 can be charged or inspected. Moreover, the fasteners 46 are removed while the battery 13 is removed from the holding base 16, and then the second lid member 32b is removed from the base body 31 as indicated by virtual lines in FIG. 3. This exposes the overall mounting-part connector 23 to the outside, facilitating inspection, maintenance, replacement, and the like of the mounting-part connector 23. Similarly, the fasteners 34 are removed to separate the first lid member 32a from the base body 31, thereby opening the hollow part 35 so as to expose the overall controller 36 to the outside. This facilitates inspection, maintenance, replacement, and the like of the controller 36.

When the battery 13 is mounted on the holding base 16, the battery 13 is manually moved in the removing direction B such that as shown in FIG. 5, the battery connector 58 is inserted into the mounting-part connector 23 and the engaging portions 59 of the battery 13 are engaged with the engaged portions 24 of the holding base 16. Thus, the battery 13 is firmly mounted on the holding base 16 and is electrically connected to the controller 36 via the mounting-part and battery connectors 23 and 58.

In this way, when the battery 13 is mounted, as described above, the auxiliary removal lever 18 is pivoted in the other direction D by the biasing force of the spring 30 so as to separate the cam member 29 from the battery 13. This can easily mount the battery 13 on the holding base 16.

After that, the key 61 inserted into the keyhole 27 is rotated in a locking direction so as to fasten the battery 13 on the holding base 16, and then the key 61 is removed from the keyhole 27.

As shown in FIG. 1, when the electric bicycle 1 travels with the battery 13 mounted on the holding base 16, the electric drive device 12 of the electric-operation hub device 11 is rotatably driven according to a pedal force applied to the pedal 6, rotating the rear wheel 4 with a combined force of the pedal force and the rotary driving force of the electric drive device 12, that is, an auxiliary driving force. At this point, as shown in FIG. 7, the battery 13 is electrically connected to the controller 36 and the electric drive device 12 via the connectors 23 and 58 and the wires 38 and 39, thereby supplying power stored in the battery 13 to the controller 36 and the electric drive device 12 via the connectors 23 and 58 and the wires 38 and 39.

During the traveling of the electric bicycle 1, wind blowing from the front directly comes into contact with the holding base 16 and thus cools the holding base 16. This efficiently dissipates heat from the controller 36 to the outside of the holding base 16.

In the present embodiment, as shown in FIG. 6, the holding base 16 includes the base body 31, the lid 32, and the bottom mounting plate 33. The holding base 16 may only include the base body 31 and the lid 32 without the bottom mounting plate 33. In this case, the base body 31 is mounted on the down tube 8.

In the present embodiment, as shown in FIG. 1, the electric bicycle 1 is described as an example of an electric vehicle. The present invention is not limited to the electric bicycle 1 and thus may be applied to, for example, an electric car or an electric motorcycle.

In the present embodiment, as shown in FIG. 1, the electric-operation hub device 11 is provided on the rear wheel 4 of the electric bicycle 1. The electric-operation hub device 11 may be provided on the front wheel 3 to rotate the front wheel 3 with the rotary driving force of the electric drive device 12. Alternatively, the electric drive device 12 may be provided on the vehicle body frame 2 to transmit the rotary driving force of the electric drive device 12 to the chain 10.

## Claims

1. A battery mounting device for mounting a battery on an electric vehicle having an electric drive device,
the battery mounting device comprising a controller for controlling the electric drive device, the controller being provided in a holding base that is mounted on a vehicle body of the electric vehicle and detachably holds the battery.

2. The battery mounting device according to claim 1, wherein the holding base has a hollow part, and
the controller is stored in the hollow part.

3. The battery mounting device according to one of claims 1 and 2, wherein the controller is electrically connected to the electric drive device via a plurality of wires, and
the holding base has a binding member that ties the wires.

4. The battery mounting device according to any one of claims 1 to 3, wherein the holding base has latching portions,
the binding member is mounted on the holding base so as to be latched on the latching portions and is stored in a cover,
the cover is detachably mounted on the holding base, and
the cover has removal preventing portions inside the cover, the removal preventing portions preventing the binding member from being removed from the latching portions.

5. The battery mounting device according to any one of claims 1 to 4, wherein the holding base includes a base body and a lid detachably mounted on the base body.

6. The battery mounting device according to claim 5, wherein the holding base includes a connector connectable to the battery, and
the lid is divided into a first lid member covering the controller and a second lid member covering the connector,
the first and second lid members being separately mounted on the base body in a detachable manner.

7. An electric bicycle comprising the battery mounting device according to any one of claims 1 to 6,
the holding base being provided on a vehicle body frame.
